# EUROPEAN PATENT SPECIFICATION

(11) **EP 1 376 829 B1**
(45) Date of publication and mention of the grant of the patent: **21.04.2010**
(21) Application number: 03013603.0
(22) Date of filing: 16.06.2003
(51) Int. Cl.: H02K 15/095

(54) **Coil stratification with improved needle movement**
Stratifikabwicklung mit verbesserter Nadelbewegung
Bobinage stratifiée par mouvement perfectionné de l'aiguille

(30) Priority: 17.06.2002 US 389529 P; 10.06.2003 US 458921
(43) Date of publication of application: 02.01.2004
(73) Proprietor: ATOP S.p.A., 50021 Barberino Val d'Elsa (Firenze) (IT)
(72) Inventor: Stratico', Gianfranco, 53100 Siena (IT); Lumini, Antonio, 50014 Sesto Fiorentino, (Firenze) (IT); Stratico', Simone, 53100 Siena (IT)
(74) Representative: Lotti, Giorgio

(56) References cited:
- EP-A- 1 076 401
- EP-A- 1 191 672
- EP-A- 1 221 756
- US-A- 6 098 912

## Description

### Background of the Invention

The present application concerns improved solutions for winding coils of wire onto dynamo-electric machine components such as stators and armatures. More particularly, the solutions of the present application provide improved needle equipment for accomplishing the winding of wire coils around poles of a stator core where the wire turns of the coils need accurate stratification.

Accurate stratification of the wire turns normally requires placing wire turns in predetermined positions along the radially extending sides of the poles. The solutions of this invention make it possible to wind coils at high winding speeds without incurring vibration of the wire dispensing needles that cause unwanted wire turn disposition and wire tension variation within the coils.

Solutions for moving the needles in the stratification direction are described in EP 1,191,672, EP 1,076,401 and EP 1,221,756. These solutions require that equipment for guiding the needles in the stratification direction passes through the interior of the stator core during the translation stroke of the needle to wind. Consequently the size of the interior of the stator needs to be large enough to allow the passage of this equipment. The solutions of this invention allow wire dispensing needles to move with respect to the stator core in extremely narrow gaps (e.g., the gaps existing between poles of the stator core) at high speed and with a lower risk of the wire dispensing needles colliding with the surrounding parts. Using the solutions of this invention, these achievements are possible for stator cores having very small hollow interiors that would not allow passage of conventional needle equipment during relative winding motion with respect to the stator core.

These and other objects of the present invention will be more apparent in view of the following drawings and detailed description.

### Brief Description of the Drawings

Non-limiting embodiments of the present invention are described hereinafter with reference to the accompanying drawings in which:
FIG. 1 is a partial section view of ohe embodiment of the present invention as seen from direction 1 - 1 of FIG. 2;
FIG. 2 is an axial end view of one embodiment of the present invention as seen from direction 2 - 2 of FIG. 1 that omits some parts shown in FIG. 1 for clarity;
FIG. 3 is a view of the guide structure of one embodiment of the present invention from direction 3 -3 of FIG. 1;
FIG. 4 is a partial perspective view of one embodiment of the present invention as seen from direction 4 of FIG. 2;

### Detailed Description of the Invention

The solutions of the present application are related to those described in Becherucci et al. U.S. patent 6,533,208 and Stratico et al. U.S. patent application No. 09/960,550, filed September 20, 2001.

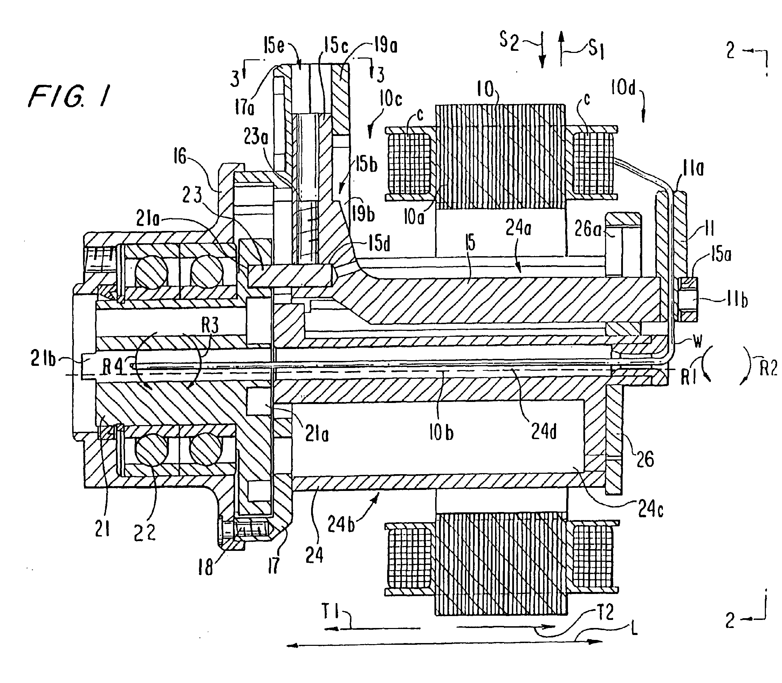

Stator core 10 of FIG. 1 is shown sectioned and positioned for winding with wire W to form coils C extending around poles 10a. Needle 11 is a hollow cylindrical member for allowing passage of wire W so that wire W is delivered from extremity 11a of needle 11. Needle 11 needs to be provided with relative motions T1, T2, R1, R2, S1 and S2 with respect to stator core 10 in order to wind wire W to form coils C. Relative motions T1 and T2 are forward and backwards translations which cause needle 11 to traverse the internal hollow portion of stator core 10. Rotations R1 and R2 are rotary motions with respect to central axis 10b of the stator core, and are accomplished when the needle has been brought beyond the end extremities 10c and 10d of the stator core.

As is well known to those in the art, a combination of motions in a progressive order (e.g., first T1, then R1, then T2 and then R2) cause the needle to wind wire W around a pole for one turn of the coil. Translation motions S1 or S2, which are usually perpendicular to translations T1 and T2, are normally accomplished to obtain stratification of the wire turns. The length and occurrence of motions S1 or S2 is usually programmable and dependent on the desired turn disposition around the pole.

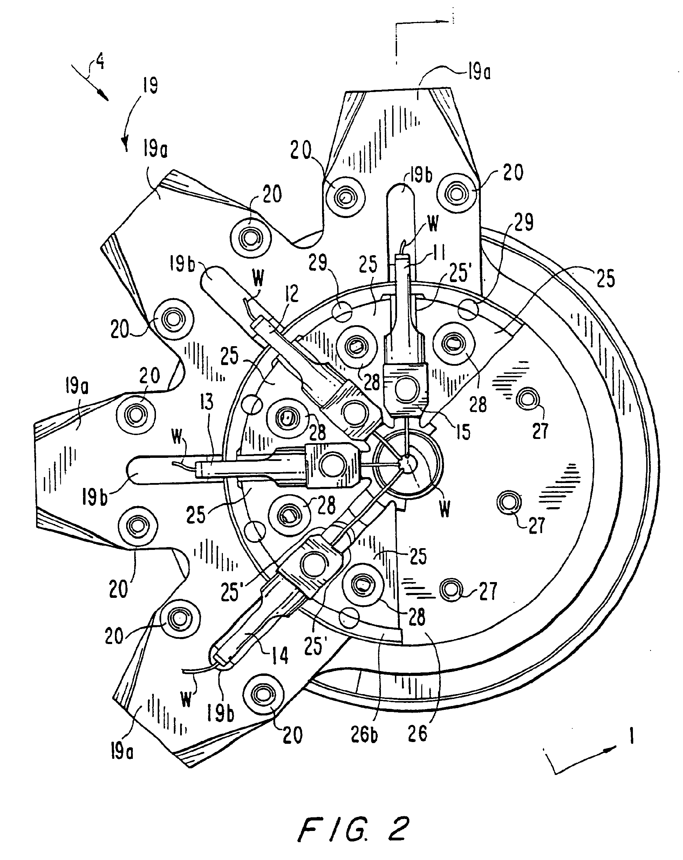

FIG. 2 shows that the present invention makes it possible to simultaneously wind a plurality of poles using additional needles such as needles 12, 13 and 14. Each of needles 11, 12, 13 and 14 is normally provided with the motions previously described for needle 11. Each needle may wind a respective coil C around a respective pole 10a of the stator core by delivering wire W in the manner described for needle 11. Note that FIG. 2 shows needles 11, 12, and 13 at their most radially proximal locations and needle 14 at its most radially distal location. This is a composite illustration for the purpose of showing the range of motion of needles 11, 12, 13, and 14.

As shown in FIG. 1, needle 11 can be fixed perpendicularly to needle arm 15 by receiving the radially proximal end of needle 11 in bore 15a of needle arm 15. Grub screw 11b can be used to secure the radially proximal end of needle 11 in bore 15a. Needle arm 15 normally extends parallel to longitudinal axis 10b of the stator core as shown in FIG. 1. Extreme portion 15b of the needle arm can be spaced from needle 11 a distance L sufficient to allow needle 11 to be outside the stator core at one end of the stator core (e.g., end 10d of FIG. 1) while extreme portion 15b is outside the opposite end of the stator core (e.g., end 10c of FIG. 1). This condition is represented in FIG. 1 and normally corresponds to the end of a translation stroke like T2 and just before a rotation like R2. Extreme portion 15b includes a guide portion 15c. Guide portion 15c guides needle arm 15 during stratification motions like S1 and S2, as will be more fully described in the following.

External member 16 can be provided with relative rotation motions R1 and R2 with respect to stator core 10. Guide support member 17 is flanged to the end of external member 16 by means of bolts 18. Guide support member 17 can have upright portions 17a to receive guide portion 15c of needle arm 15. Cover member 19 can be flanged to guide support member 17 by means of bolts 20. Cover member 19 can have upright portions 19a configured to be adjacent and forward of upright portions 17a. When cover member 19 is flanged to guide support member 17, portions 17a and 19a can form a guide way 15e that receives guide portion 15c. Guide way 15e can be configured perpendicular to longitudinal axis 10b in order to guide stratification motions S1 and S2. Upright portions 19a can be provided with apertures 19b to allow passage of needle arm 15 through cover member 19 during stratification motions.

Disk member 21 can be assembled coaxially within external member 16, and can be provided with relative rotation motions R3 or R4 with respect to external member 16. Bearings 22 can be provided between disk member 21 and external member 16 to allow the relative rotation motions R3 or R4 around axis 10b. The frontal end of disk member 21 can be provided with spiral grooves 21a, which can act as constraining guide ways for pin 23 partially received therein, as shown in FIG. 1. Pin 23 is fixed to needle arm 15 by being also partially received in bore 15d of needle arm 15. A grub screw 23a, located in the interior of guide portion 15c can secure pin 23 in bore 15d. By means of this assembly in which pin 23 is engaged in a spiral groove 21a, and by means of the relative motions R3 and R4, the needle arm is driven to accomplish stratification motions S1 and S2.

As shown in FIG. 2, lid member 26 is flanged to casing member 24 by means of bolts 27. Casing member 24 is flanged to guide support member 17 by means of bolts (not shown). Lid member 26 has slits 26a (shown in FIG. 1) for receiving needle arms 15. Slits 26a are in directions parallel to stratification motions S1 and S2 of needle arms 15 to enable stratification motions S1 and S2 to occur. Circular rib 26b reinforces lid member 26. Slits 26a (shown in FIG. 1) also allow needle arms 15 to project axially beyond lid member 26.

FIG. 2 shows that inserts 25 are bolted to the end face of lid member 26 by means of bolts 28. Inserts 25 partially close slits 26a with their sides 25' which become extremely proximate to needle arms 15. In this way inserts 25 act as lateral support surfaces for needle arms 15, and at the same time guide the unimpeded motion of needle arms 15 in directions parallel to the stratification motions S1 and S2. Pins 29 act as anti-rotation members for inserts 25 in order to keep the sides 25' of inserts 25 parallel to the sides of needle arms 15.

FIG. 1 shows that casing member 24 can have an empty area 24a for allowing passage of needle arm 15, while casing member 24 needs to be materially structured in area 24b to provide sufficient extension length to reach the end of the apparatus where lid member 26 needs to be flanged by way of bolts 27. This extension length guarantees that a portion of the needle equipment for the stratification motion is outside of one end of the stator core (e.g., end 10c in FIG. 1) when needle 11 is beyond the opposite end of the stator core (e.g., end 10d in FIG. 1) at the end of a translation motion such as T2. This condition is particularly required when the interior of the stator is not large enough to allow passage of a portion of the needle equipment as shown in FIG. 1.

Bore 24c of member 24 can be foreseen to reduce the weight of member 24. Wires W run through hollow interiors 24d (of member 24) and 21b (of member 21) to reach needle 11. Wire W can be easily inserted through needles 11 by an operator because of the free access area that exists below the end of needle 11.

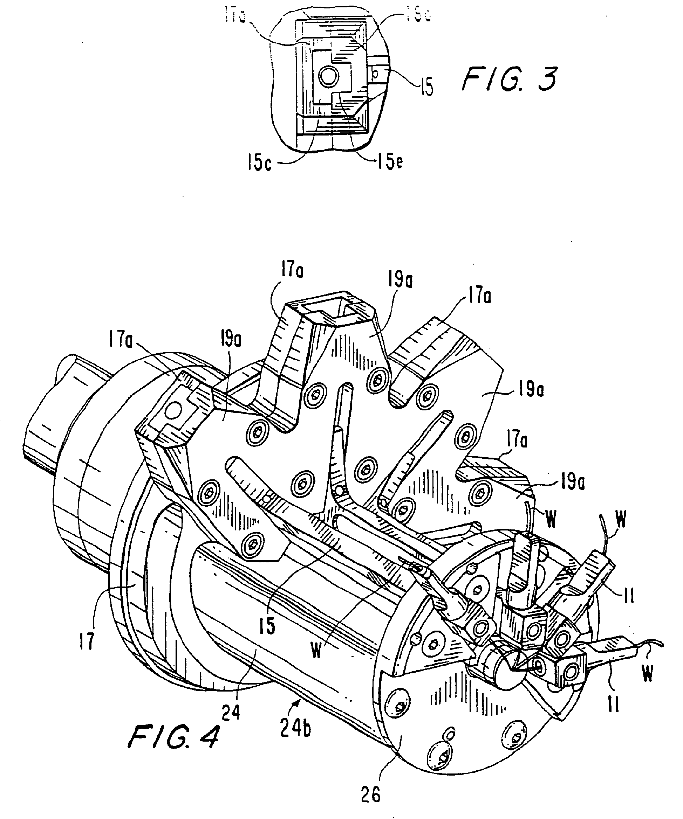

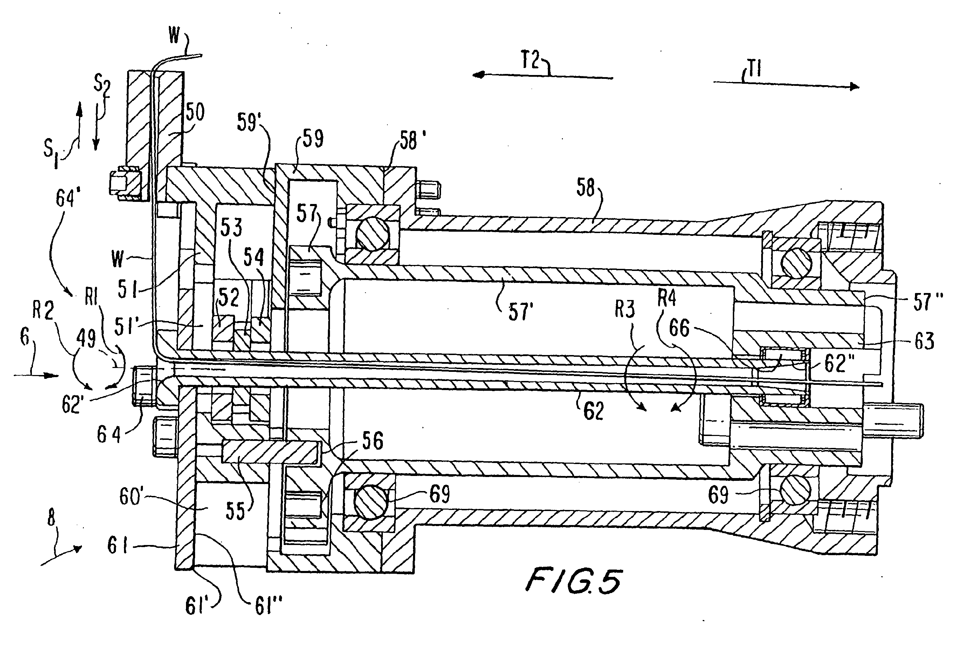

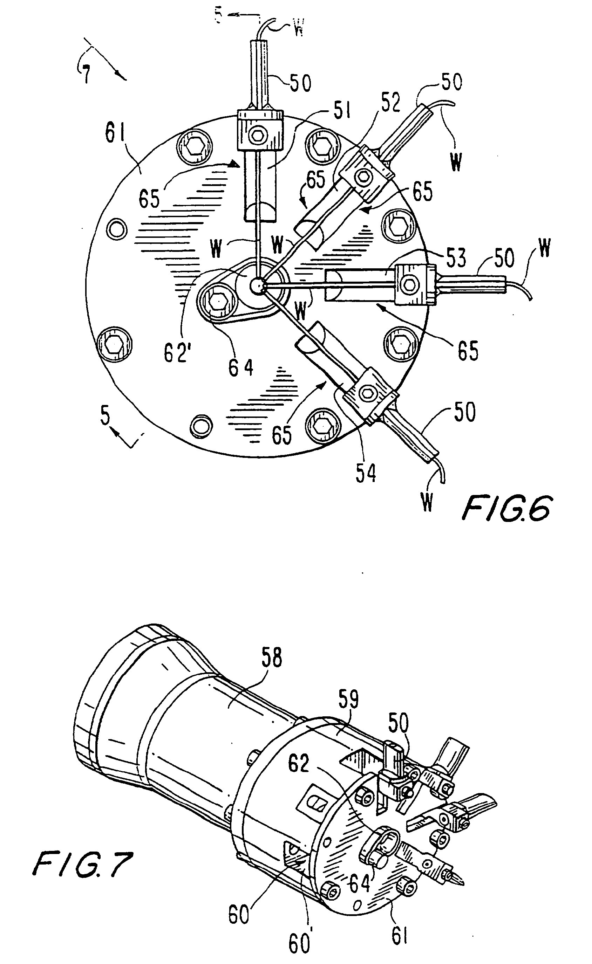

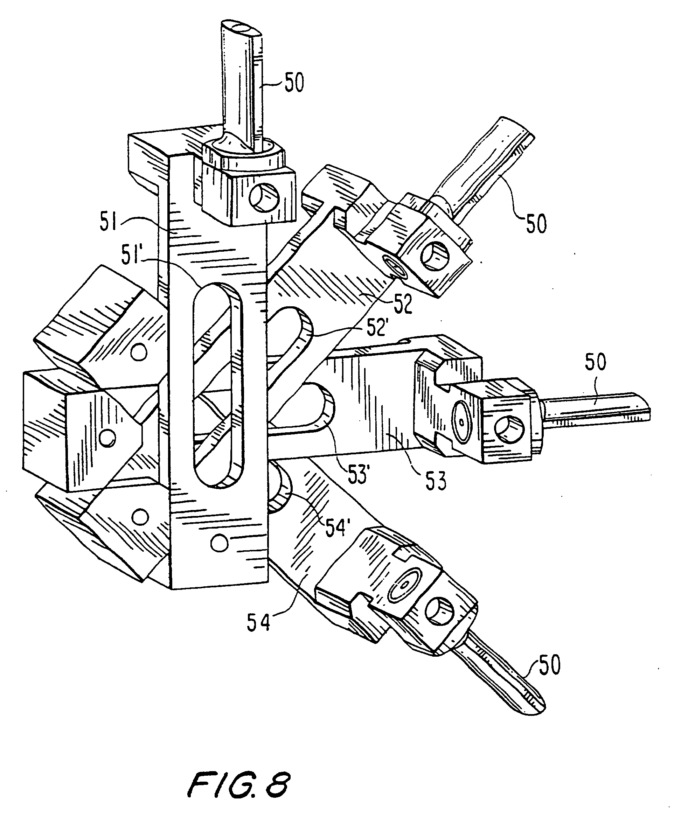

FIGS. 3 and 4 show how multiple needles can be arranged to wind wires W to form coils C around poles like 10a. Each needle will be assembled with parts and principles that can be identical to those described for needle 11. In this case, disk member 21 can be provided with a spiral slot 21a for each of pins 23 to cause each of needles 11, 12, 13, and 14 to accomplish stratification motions S1 and S2 during relative rotations R3 and R4 of disk member 21 with respect to the external member. Alternately, multiple pins 23 may be engaged within a single spiral slot 21a to accomplish sequential stratification motions for the multiple needles. Note, similar to FIG. 2, FIG. 4 is a composite illustration for the purpose of showing the range of motion of needles 11, 12, 13, and 14.

To accomplish relative motions T1, T2, R1 and R2 of the needles with respect to the stator core, either stator core 10, or external member 16 can be provided with any of such motions. Motions T1, T2, R1, and R2 of the stator core or external member 16 can be achieved using apparatus described in the previously incorporated references. It will be appreciated that each needle 11 may deliver more than one wire W by passing additional wires W through hollow portions 21b, 24d, and needle 11.

Thus, improved needle solutions for winding wire coils and stratifying wire turns are provided. One skilled in the art will appreciate that the present invention can be practiced by other than the described embodiments, which are presented for the purpose of illustration and not of limitation.

## Claims

1. An apparatus for winding wire coils (C) onto a dynamo-electric machine component (10) comprising: a first actuation mechanism configured to produce relative reciprocation (T1, T2) between a needle arm (15) and a central hollow core of the machine component (10), the needle arm (15) reciprocating through the hollow core; a second actuation (21,23) mechanism configured to translate the needle arm substantially perpendicular to the relative reciprocation motion to stratify the wire coils (C) being wound onto the component; and a guide structure configured to guide the needle arm during the translation motion to move substantially perpendicular to the relative reciprocation motion, the apparatus being **characterised in that** the guide structure (15c,15e) accomplishes the relative reciprocation motion (T1,T2) along with the needle arm (15) and remains outside of the hollow core during the winding of the wire coils (C).

2. The apparatus of claim 1 wherein the guide structure (15c,15e) comprises a radially extending slot (15e) that receives a portion (15c) of the needle arm (15).

3. The apparatus of claim 1 wherein the second actuation mechanism comprises an actuating element (21) in engaging communication with the needle arm (15), wherein the translation motion (S1,S2) is actuated through relative rotation between the actuating element (21) and the needle arm (15).

4. The apparatus of claim 3 wherein the actuating element is a disk (21) having a spiral track in engaging communication with the needle arm (15) to actuate the translation motion (S1,S2).

5. The apparatus of claim 1 wherein the guide structure (15c,15e) is substantially disposed between the needle arm (15) and the second actuation mechanism (21,23).

6. The apparatus of claim 1 further comprising supporting structure (24, 25) at least partially disposed circumferentially about the needle arm (15) and configured to stabilize movements of the needle arm (15).

7. The apparatus of claim 6 wherein the supporting structure (24, 25) is further configured to enter the hollow core along with the needle arm (15) during winding of the wire coils (C).

8. The apparatus of claim 6 wherein the supporting structure (24, 25) comprises a hollow tube (24d) extending through the second actuation mechanism and the guide structure (15c,15e) to feed wire to a needle (11) disposed near a distal end of the needle arm (15).

9. The apparatus of claim 8 wherein the supporting structure (24, 25) further comprises an opening adjacent a distal end of the supporting structure to provide open access to the wire being fed through the hollow tube (24d).

10. The apparatus of claim 1 wherein multiple needle arms (15) are coupled to the actuation mechanisms and used to simultaneously wind multiple poles of the machine component (10).

11. The apparatus of claim 10 wherein each needle arm (15) is received in a respective radially extending slot (19b) of the guide structure (15c,15e).

12. A method for winding wire coils (C) onto a dynamo-electric machine component (10) comprising: producing relative reciprocation between a needle arm (15) and a central hollow core of the machine component, the needle arm (15) reciprocating .through the hollow core; translating the needle arm (15) substantially perpendicular to the relative reciprocation motion (T1,T2) to stratify the wire coils being wound onto the component; and guiding the needle arm (15) during the translation motion with guide structure (15c,15e) to move the needle arm substantially perpendicular to the relative reciprocation motion, **characterised in that** the guide structure (15c,15e) accomplishes the relative reciprocation motion along with the needle arm and remains outside of the hollow core during the winding of the wire coils (C).

13. The method of claim 12 wherein the guiding the needle arm (15) during the translation motion (S1,S2) comprises receiving a portion (15c) of the needle arm within a radially extending slot (15e).

14. The method of claim 12 wherein translating the needle arm comprises producing relative rotation between the needle arm (15) and an actuating element (21) in engaging communication with the needle arm (15).

15. The method of claim 12 further comprising stabilizing movements of the needle arm with supporting structure (24, 25) at least partially disposed circumferentially about the needle arm (15), wherein the supporting structure (24, 25) is configured to enter the hollow core along with the needle arm during winding of the wire coils (C).

16. The method of claim 15 further comprising feeding wire (W) to a needle (11) disposed near a distal end of the needle arm (15) through a hollow tube (24d) that extends through the guide structure (15c,15e) and the supporting structure (24, 25).

17. The method of claim 16 further comprising providing open access to the wire being fed through the hollow tube (24d) through an opening adjacent a distal end of the supporting structure (24, 25).

## Patentansprüche

1. Vorrichtung zum Wickeln von Drahtspulen (C) auf ein dynamoelektrisches Maschinenbauteil (10), aufweisend:
einen ersten Betätigungsmechanismus der so gestaltet ist, dass er eine relative Hin- und Herbewegung (T1, T2) zwischen einem Nadelarm (15) und einem zentralen hohlen Kern des Maschinenbauteils (10) erzeugen kann, wobei der Nadelarm (15) durch den hohlen Kern hin und her bewegt wird;
einen zweiten Betätigungsmechanismus (21, 23) der gestaltet ist, um den Nadelarm im Wesentlichen senkrecht zu der relativen Hin- und Herbewegung in Translationsbewegung zu versetzen, um die auf das Bauteil gewickelten Drahtspulen (C) zu schichten; und
eine Führungsstruktur, die so gestaltet ist, dass sie den Nadelarm so führt, dass er sich während der Translationsbewegung im Wesentlichen senkrecht zu der relativen Hin- und Herbewegung bewegt, wobei die Vorrichtung **dadurch gekennzeichnet ist, dass** die Führungsstruktur (15c, 15e) das relative Hin- und Herbewegen (T1, T2) gemeinsam mit dem Nadelarm (15) durchführt und während des Wickelns der Drahtspulen (C) außerhalb des hohlen Kerns bleibt.

2. Die Vorrichtung nach Anspruch 1, wobei die Führungsstruktur (15c, 15e) einen sich radial erstreckenden Schlitz (15e) aufweist, der einen Teil (15c) des Nadelarms (15) empfängt.

3. Die Vorrichtung nach Anspruch 1, wobei der zweite Betätigungsmechanismus ein Betätigungselement (21) aufweist, das mit dem Nadelarm (15) in kupplungsartiger Verbindung steht, wobei die Translationsbewegung (S1, S2) durch relative Rotation zwischen dem Betätigungselement (21) und dem Nadelarm (15) betätigt wird.

4. Die Vorrichtung nach Anspruch 3, wobei das Betätigungselement eine Scheibe (21) ist, die eine spiralförmig Bahn hat, die mit dem Nadelarm (15) in kupplungsartiger Verbindung steht, um die Translationsbewegung (S1, S2) anzutreiben.

5. Die Vorrichtung nach Anspruch 1, wobei die Führungsstruktur (15c, 15e) im Wesentlichen zwischen dem Nadelarm (15) und dem zweitem Betätigungsmechanismus (21, 23) angeordnet ist.

6. Die Vorrichtung nach Anspruch 1, weiterhin aufweisend eine Stützstruktur (24, 25), die wenigstens teilweise in Umfangsrichtung um den Nadelarm (15) angeordnet ist und so gestaltet ist, dass sie Bewegungen des Nadelarms (15) stabilisieren kann.

7. Die Vorrichtung nach Anspruch 6, wobei die Stützstruktur (24, 25) weiter so gestaltet ist, dass sie zusammen mit dem Nadelarm (15) während des Wickelns der Drahtspulen (C) in den hohlen Kern eindringen kann.

8. Die Vorrichtung nach Anspruch 6, wobei die Stützstruktur (24, 25) eine hohle Röhre (24d) aufweist, die durch den zweiten Betätigungsmechanismus und die Führungsstruktur (15c, 15e) verläuft, um Draht einer Nadel (11) zuzuführen, die in der Nähe eines distalen Endes des Nadelarms (15) angeordnet ist.

9. Die Vorrichtung nach Anspruch 8, wobei die Stützstruktur (24, 25) weiterhin eine Öffnung aufweist, die an das distale Ende der Stützstruktur angrenzt, um einen freien Zugang zum Draht zu gewähren, der durch die hohle Röhre (24d) geführt wird.

10. Die Vorrichtung nach Anspruch 1, wobei mehrere Nadelarme (15) an die Betätigungsmechanismen gekoppelt sind und dazu genutzt werden simultan mehrere Pole des Maschinenbauteils (10) zu wickeln.

11. Die Vorrichtung nach Anspruch 10, wobei jeder Nadelarm (15) von einem jeweiligen radial verlaufenden Schlitz (19b) der Führungsstruktur (15c, 15e) aufgenommen wird.

12. Verfahren zum Wickeln von Drahtspulen (C) auf ein dynamoelektrisches Maschinenbauteil (10), welches Verfahren die folgenden Schritte aufweist:
Erzeugen einer relativen Hin- und Herbewegung zwischen einem Nadelarm (15) und einem zentralen hohlen Kern des Maschinenbauteils, wobei sich der Nadelarm (15) durch den hohlen Kern hin und her bewegt;
Translation des Nadelarms (15) im Wesentlichen senkrecht zur relativen Hin- und Herbewegung (T1, T2), um die auf das Maschinenbauteil gewickelten Drahtspulen zu schichten; und
Führen des Nadelarms (15) während der Translationsbewegung mittels einer Führungsstruktur (15c, 15e) um den Nadelarm im Wesentlichen senkrecht zur relativen Hin- und Herbewegung zu bewegen **dadurch gekennzeichnet, dass** die Führungsstruktur (15c, 15e) die relative Hin- und Herbewegung zusammen mit dem Nadelarm durchführt und während des Wickelns der Drahtspulen (C) außerhalb des hohlen Kerns bleibt.

13. Das Verfahren nach Anspruch 12, wobei das Führen des Nadelarms (15) während der Translationsbewegung (S1, S2) das Empfangen eines Teils (15e) des Nadelarms innerhalb eines sich radial erstreckenden Schlitzes umfasst.

14. Das Verfahren nach Anspruch 12, wobei die Translation des Nadelarms die Erzeugung einer Relativdrehung zwischen dem Nadelarm (15) und einem Betätigungselement (21) umfasst, das mit dem Nadelarm (15) in kupplungsartiger Verbindung steht.

15. Das Verfahren nach Anspruch 12, wobei das Verfahren weiterhin die Stabilisierung von Bewegungen des Nadelarms mittels einer Stützstruktur (24, 25) umfasst, wobei die Stützstruktur (24, 25) wenigstens teilweise in Umfangsrichtung um den Nadelarm (15) angeordnet ist und so gestaltet ist, dass sie während des Wickelns der Drahtspulen (C) zusammen mit dem Nadelarm in den hohlen Kern eindringen kann.

16. Das Verfahren nach Anspruch 15, wobei das Verfahren weiterhin das Zuführen von Draht (W) auf eine Nadel (11), die in der Nähe eines distalen Endes des Nadelarms (15) angeordnet ist, durch eine hohle Röhre (24d) umfasst, die sich durch die Führungsstruktur (15c, 15e) und die Stützstruktur (24, 25) erstreckt.

17. Das Verfahren nach Anspruch 16, weiter umfassend das Gewähren von freiem Zugang zum Draht, welcher durch die hohle Röhre (24d) zugeführt wird durch eine Öffnung, die an das distale Ende der Stützstruktur (24, 25) angrenzt.

## Revendications

1. Appareil d'enroulement de bobinages de fil métallique (C) sur un composant de machine dynamoélectrique (10), comprenant : un premier mécanisme d'actionnement configuré pour produire un mouvement alternatif relatif (T1, T2) entre un bras d'aiguille (15) et un noyau creux central du composant de machine (10), le bras d'aiguille (15) exécutant un mouvement alternatif à travers le noyau creux ; un second mécanisme d'actionnement (21, 23) configuré pour faire translater le bras d'aiguille (15) sensiblement perpendiculairement au mouvement alternatif relatif (T1, T2) pour stratifier les bobinages de fil métallique qui sont en cours d'enroulement sur le composant ; et une structure guide configurée pour guider le bras d'aiguille pendant le mouvement de translation pour qu'il se déplace sensiblement perpendiculairement au mouvement alternatif relatif, ledit appareil étant **caractérisé en ce que** la structure guide (15c, 15e) accomplit le mouvement alternatif relatif (T1, T2) en même temps que le bras d'aiguille (15) et reste à l'extérieur du noyau creux pendant l'enroulement des bobinages de fil métallique (C).

2. Appareil selon la revendication 1, dans lequel la structure guide (15c, 15e) comprend une fente (15e) s'étendant radialement, qui reçoit une partie (15c) du bras d'aiguille (15).

3. Appareil selon la revendication 1, dans lequel le second mécanisme d'actionnement comprend un élément actionneur (21) en liaison par engagement avec le bras d'aiguille (15), dans lequel le mouvement de translation (S1, S2) est actionné par la rotation relative entre l'élément actionneur (21) et le bras d'aiguille (15).

4. Appareil selon la revendication 3, dans lequel l'élément actionneur est un disque (21) ayant une piste en spirale en liaison par engagement avec le bras d'aiguille (15) pour générer le mouvement de translation (S1, S2).

5. Appareil selon la revendication 1, dans lequel la structure guide (15c, 15e) est essentiellement disposée entre le bras d'aiguille (15) et le second mécanisme d'actionnement (21, 23).

6. Appareil selon la revendication 1, comprenant en outre une structure support (24, 25) au moins partiellement disposée circonférentiellement autour du bras d'aiguille (15) et configurée pour stabiliser les mouvements du bras d'aiguille (15).

7. Appareil selon la revendication 6, dans lequel la structure support (24, 25) est en outre configurée pour pénétrer dans le noyau creux en même temps que le bras d'aiguille (15) pendant l'enroulement des bobinages de fil métallique (C).

8. Appareil selon la revendication 6, dans lequel la structure support (24, 25) comprend un tube creux (24d) qui s'étend au travers du second mécanisme d'actionnement et de la structure guide (15c, 15e) pour alimenter en fil métallique une aiguille (11) disposée au voisinage d'une extrémité distale du bras d'aiguille (15).

9. Appareil selon la revendication 8, dans lequel la structure support (24, 25) comprend en outre une ouverture adjacente à une extrémité distale de la structure support pour fournir un accès ouvert au fil métallique qui est alimenté à travers le tube creux (24d).

10. Appareil selon la revendication 1, dans lequel de multiples bras d'aiguille (15) sont couplés aux mécanismes d'actionnement, et sont utilisés pour bobiner simultanément des pôles multiples du composant de machine (10).

11. Appareil selon la revendication 10, dans lequel chaque bras d'aiguille (15) est reçu dans une fente associée (19b) s'étendant radialement de la structure guide (15c, 15e).

12. Procédé d'enroulement de bobinages de fil métallique (C) sur un composant de machine dynamoélectrique (10) comprenant : la production d'un mouvement alternatif relatif entre un bras d'aiguille (15) et un noyau creux central du composant de machine, le bras d'aiguille (15) exécutant un mouvement alternatif à travers le noyau creux ; la translation du bras d'aiguille (15) sensiblement perpendiculairement au mouvement alternatif relatif (T1, T2) pour stratifier les bobinages de fil métallique qui sont en cours d'enroulement sur le composant ; et le guidage du bras d'aiguille (15) pendant le mouvement de translation avec une structure guide (15c, 15e) pour déplacer le bras d'aiguille sensiblement perpendiculairement au mouvement alternatif relatif, **caractérisé en ce que** la structure guide (15c, 15e) accomplit le mouvement alternatif relatif en même temps que le bras d'aiguille et reste à l'extérieur du noyau creux pendant l'enroulement des bobinages de fil métallique (c).

13. Procédé selon la revendication 12, dans lequel le guidage du bras d'aiguille (15) pendant le mouvement de translation (S1, S2) comprend la réception d'une partie (15c) du bras d'aiguille à l'intérieur d'une fente (15e) s'étendant radialement.

14. Procédé selon la revendication 12, dans lequel la translation du bras d'aiguille comprend la production d'une rotation relative entre le bras d'aiguille (15) et un élément actionneur (21) en liaison par engagement avec le bras d'aiguille (15).

15. Procédé selon la revendication 12, comprenant en outre la stabilisation des mouvements du bras d'aiguille avec une structure support (24, 25) au moins partiellement disposée circonférentiellement autour du bras d'aiguille (15), dans lequel la structure support (24, 25) est configurée pour pénétrer dans le noyau creux en même temps que le bras d'aiguille pendant l'enroulement des bobinages de fil métallique (C).

16. Procédé selon la revendication 15, comprenant en outre l'alimentation en fil métallique (W) d'une aiguille (11) disposée au voisinage d'une extrémité distale du bras d'aiguille (15) à travers un tube creux (24d) qui s'étend au travers de la structure guide (15c, 15e) et de la structure support (24, 25).

17. Procédé selon la revendication 16, comprenant en outre la fourniture d'un accès ouvert au fil métallique qui est alimenté à travers le tube creux (24d) par une ouverture adjacente à une extrémité distale de la structure support (24, 25).
